# FASCICULE DE BREVET EUROPEEN

(11) **EP 2 625 467 B1**
(45) Date de publication et mention de la délivrance du brevet: **16.03.2016**
(21) Numéro de dépôt: 11764543.2
(22) Date de dépôt: 04.10.2011
(51) Int. Cl.: F28F 21/06, F24F 12/00, F28D 9/00, F28F 1/02, F24F 3/14, F24F 3/147, F28D 21/00

(54) **ECHANGEUR A DOUBLE FLUX D'AIR A TRANSFERTS THERMIQUE ET D'HUMIDITE AMELIORES**
DOPPELSTROM-WÄRMETAUSCHERVORRICHTUNG MIT VERBESSERTER WÄRME-UND-FEUCHTIGKEITSÜBERTRAGUNG
DOUBLE FLOW HEAT EXCHANGER WITH IMPROVED HEAT AND HUMIDITY TRANSFER

(30) Priorité: 06.10.2010 FR 1058092
(43) Date de publication de la demande: 14.08.2013
(73) Titulaire: Commissariat à l'Énergie Atomique et aux Énergies Alternatives, 75015 Paris (FR)
(72) Inventeur: MARIOTTO, Mathieu, F-38400 Saint-Martin-d'Hères (FR); COLASSON, Stéphane, F-38340 Voreppe (FR); GERBAUX, Odile, F-38210 Montaud (FR)
(74) Mandataire: Ilgart, Jean-Christophe
(86) Numéro de dépôt international: PCT/EP2011/067272
(87) Numéro de publication internationale: WO 2012/045717

(56) Documents cités:
- JP-A- 59 177 119
- US-A- 4 911 775
- US-A1- 2004 118 554
- US-A1- 2009 126 898

## Description

L'invention se rapporte au domaine des échangeurs à double flux d'air, du type permettant un transfert thermique ainsi qu'un transfert d'humidité entre les deux flux d'air traversant l'échangeur. Un tel échangeur assurant ce double transfert est également couramment dénommé « échangeur total » ou « échangeur enthalpique ».

L'invention s'applique de préférence au domaine des systèmes de traitement et de conditionnement d'air, pour bâtiments, de l'habitât ou du tertiaire. Dans cette application, l'échangeur garantit un transfert thermique entre le flux d'air vicié et le flux d'air neuf, mais également un transfert d'humidité entre ces deux flux, du milieu le plus humide vers le milieu le plus sec.

L'invention trouve des applications , dans d'autres domaines techniques, par exemple dans le domaine cryogénique ou celui de la récupération de chaleur.

De tels échangeurs sont largement connus de l'art antérieur (voir le document US 2004/118554 qui décrit un échangeur selon le préambule de revendication 1). Néanmoins, il existe un besoin d'optimisation de ces échangeurs, en termes d'efficacité de transfert thermique et de transfert d'humidité.

Pour répondre à ce besoin, l'invention a pour objet un échangeur à double flux d'air, permettant un transfert thermique et un transfert d'humidité entre les deux flux d'air, et comprenant une pluralité de réseaux de circulation d'air empilés les uns sur les autres selon une direction d'empilement et séparés deux à deux par des membranes perméables à la vapeur d'eau et imperméables à l'air. Selon l'invention, au moins l'un desdits réseaux est réalisé par une structure en nid d'abeilles en appui de part et d'autre respectivement contre deux desdites membranes, ladite structure en nid d'abeilles présentant des alvéoles cylindriques dont les axes sont parallèles à ladite direction d'empilement, et dont au moins une partie des faces constituant ces alvéoles sont perforées pour le passage de l'air.

L'invention est remarquable en ce que le choix de la structure en nid d'abeilles et de l'orientation de ses alvéoles au sein de l'échangeur permet d'optimiser les transferts thermiques entre les deux flux d'air. En effet, la forme polygonale des alvéoles, et de préférence hexagonale, multiplie la surface secondaire d'échange constituée par les faces des alvéoles. Cette surface secondaire, provoquant un effet dit « d'ailettes », est d'ailleurs encore augmentée lorsque certaines des faces de ces alvéoles restent non-perforées. En outre, toujours en raison de la forme polygonale des alvéoles, il se crée une recirculation de fluide qui optimise les échanges convectifs entre le flux d'air et les membranes. Cette recirculation peut être adaptée en fonction des besoins rencontrés, en choisissant judicieusement les faces des alvéoles à perforer, et celles à conserver. A titre d'exemple, les perforations réalisées au sein de la structure en nid d'abeilles peuvent être prévues pour permettre au flux d'air d'effectuer plusieurs passes au sein de la structure, avant d'en être extrait. Un autre exemple réside dans la création, au sein de la structure en nid d'abeilles, d'une zone de distribution et/ou d'une zone de collecte du flux d'air.

La structure en nid d'abeilles est préférentiellement métallique, pour une conduction thermique encore améliorée.

L'invention est également remarquable en ce qu'elle permet de favoriser le transfert d'humidité entre les deux flux d'air, en gardant une grande partie des membranes actives. En effet, chaque membrane perméable à la vapeur d'eau et imperméable à l'air est seulement au contact des arêtes des alvéoles de ses structures associées, ce qui ménage une surface utile restante importante pour le transfert de vapeur d'eau.

La tenue mécanique de l'échangeur s'avère par ailleurs très satisfaisante, grâce à l'emploi de structures en nid d'abeilles et à l'orientation spécifique de ses alvéoles.

De préférence, l'échangeur est configuré pour que la circulation de l'air à l'intérieur de l'échangeur s'effectue à co-courants, à courants croisés, ou, encore plus préférentiellement, à contre-courants.

De préférence, lesdites membranes sont réalisées en matériau polymère ou en papier.

De préférence, chacun desdits réseaux est réalisé par une structure en nid d'abeilles. Néanmoins, il pourrait en être autrement, sans sortir du cadre de l'invention.

Préférentiellement, au moins l'un des réseaux présente des axes d'alvéoles décalés par rapport aux axes des alvéoles d'au moins l'un des réseaux lui étant directement consécutifs selon la direction d'empilement. Cela renforce encore davantage la tenue mécanique de l'échangeur. A cet égard, les structures en nid d'abeilles sont préférentiellement agencées en quinconce dans l'échangeur, selon la direction d'empilement.

Enfin, l'invention a pour objet un système de traitement et de conditionnement d'air comprenant un échangeur tel que décrit ci-dessus.

D'autres avantages et caractéristiques de l'invention apparaîtront dans la description détaillée non limitative ci-dessous.

Cette description sera faite au regard des dessins annexés parmi lesquels ;
- la figure 1 représente une vue schématique de face d'un système de traitement et de conditionnement d'air comprenant un échangeur à double flux d'air selon la présente invention ;
- la figure 2 représente, de manière plus détaillée, une vue schématique en perspective de l'échangeur montré sur la figure 1 ;
- la figure 3 est une vue en coupe d'une partie d'un réseau de circulation d'air de l'échangeur, prise selon le plan P2 de la figure 2 ;
- la figure 4 est une vue en coupe d'une partie de l'échangeur, prise selon le plan P1 de la figure 2 ;
- la figure 5 est une vue en perspective d'une partie de l'échangeur montré sur les figures 2 à 4 ;
- la figure 6 est une vue en perspective de l'une des alvéoles formant les réseaux de circulation d'air de l'échangeur ; et
- la figure 7 est une vue similaire à celle de la figure 2, sur laquelle l'échangeur adopte une autre forme de réalisation.

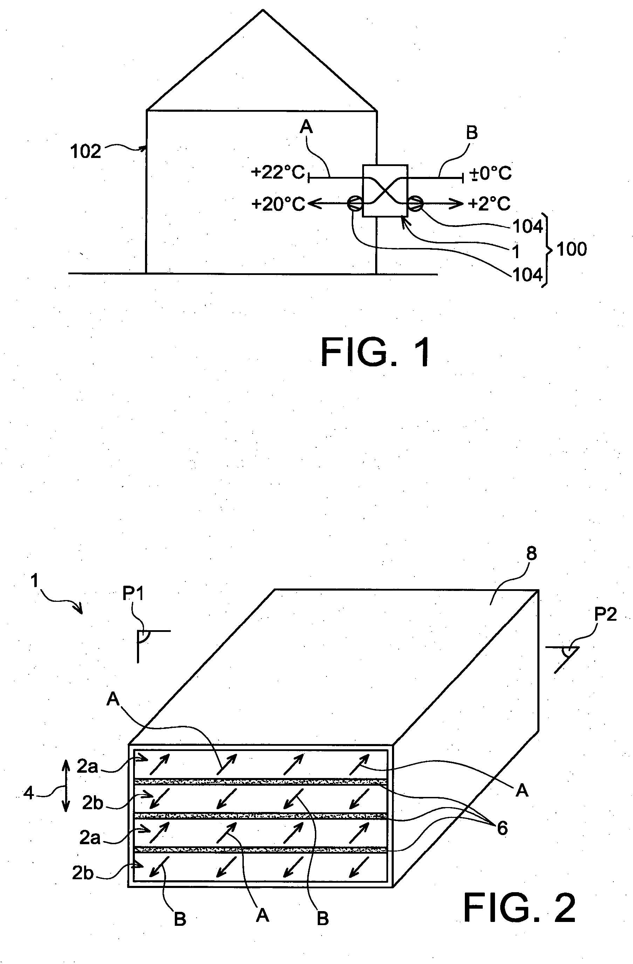

En référence à la figure 1, on peut voir un système de traitement et de conditionnement d'air 100, équipant un bâtiment 102. Ce système 100 comprend en particulier un. échangeur à double flux d'air 1, propre à la présente invention. Ici, l'échangeur 1 garantit un transfert thermique entre le flux d'air vicié A sortant du bâtiment 102, et le flux d'air neuf B entrant dans ce même bâtiment. En d'autres termes, en plus de renouveler l'air du bâtiment 102, le système 100, grâce à son échangeur de chaleur 1, permet de récupérer la chaleur ou la fraîcheur contenue dans l'air vicié A évacué du logement, et de la fournir au flux d'air neuf entrant B. Le système 100 permet donc d'éviter le gâchis d'énergie pour le chauffage ou la climatisation du bâtiment 102.

A titre d'exemple, le flux d'air vicié A peut présenter une température de 22°C avant de sortir du bâtiment, et le flux d'air neuf B peut présenter une température de 0°C avant d'entrer dans le bâtiment. Après transfert thermique dans l'échangeur, le flux B peut atteindre 20°C en sortant de l'échangeur et en entrant dans le bâtiment, et le flux A peut être refroidi à une température de 2°C en sortant de l'échangeur et du bâtiment.

Pour permettre la circulation des flux A et B, le système 100 est complété par deux ventilateurs 104, représentés schématiquement sur la figure 1.

En outre, l'échangeur 1 est également conçu pour assurer un transfert d'humidité entre ces deux flux A et B, du milieu le plus humide vers le milieu le plus sec. Cet échangeur 1 est donc qualifié d'échangeur total ou encore d'échangeur enthalpique.

Sur la figure 2, on peut apercevoir schématiquement que l'échangeur 1 comporte une pluralité de réseaux de circulation d'air 2a, 2b, empilés les uns sur les autres selon une direction d'empilement 4. Les réseaux 2a, 2b sont agencés en alternance, et respectivement prévus pour la circulation du flux vicié A et la circulation du flux neuf entrant B, comme cela a été schématisé par les flèches sur la figure 2. L'échangeur est à contre-courants, à savoir que le sens d'écoulement du flux A au sein des réseaux 2a est sensiblement opposé au sens d'écoulement du flux B au sein des réseaux 2b.

Entre les réseaux 2a et 2b directement consécutifs dans la direction 4, il est prévu une membrane polymère 6 perméable à la vapeur d'eau et imperméable à l'air. C'est donc à travers ces membranes 6 séparant les réseaux deux à deux qu'il se produit le transfert d'humidité entre les deux flux A et B.

Les membranes 6 interposées entre les réseaux 2a, 2b sont donc portées par ces derniers. L'empilement global est inséré dans une cage ou enveloppe 8, assurant l'étanchéité et interdisant la communication entre les réseaux 2a et les réseaux 2b.

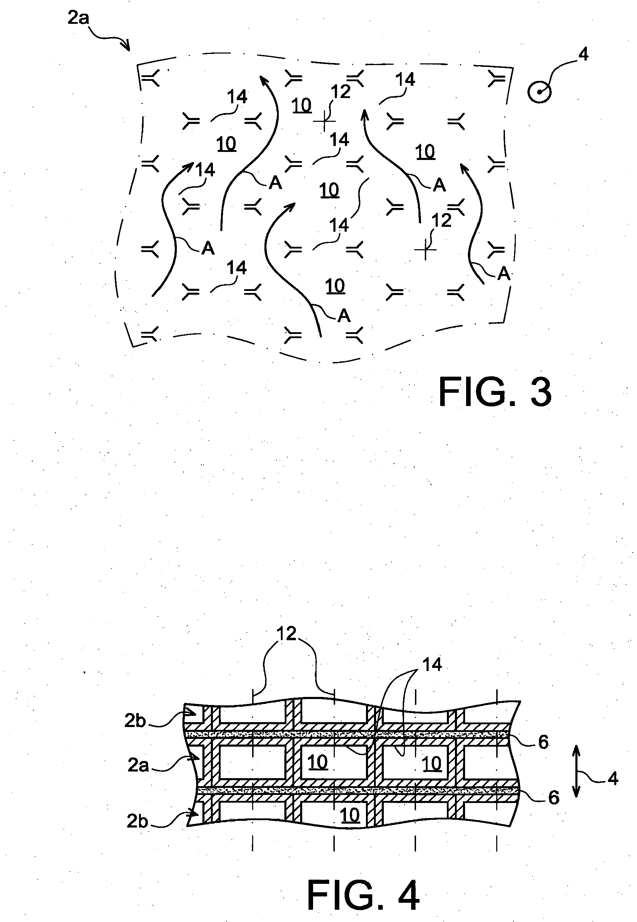

En référence aux figures 3 à 6, il est montré de manière plus détaillée la conception de l'empilement des membranes 6 et réseaux 2a, 2b.

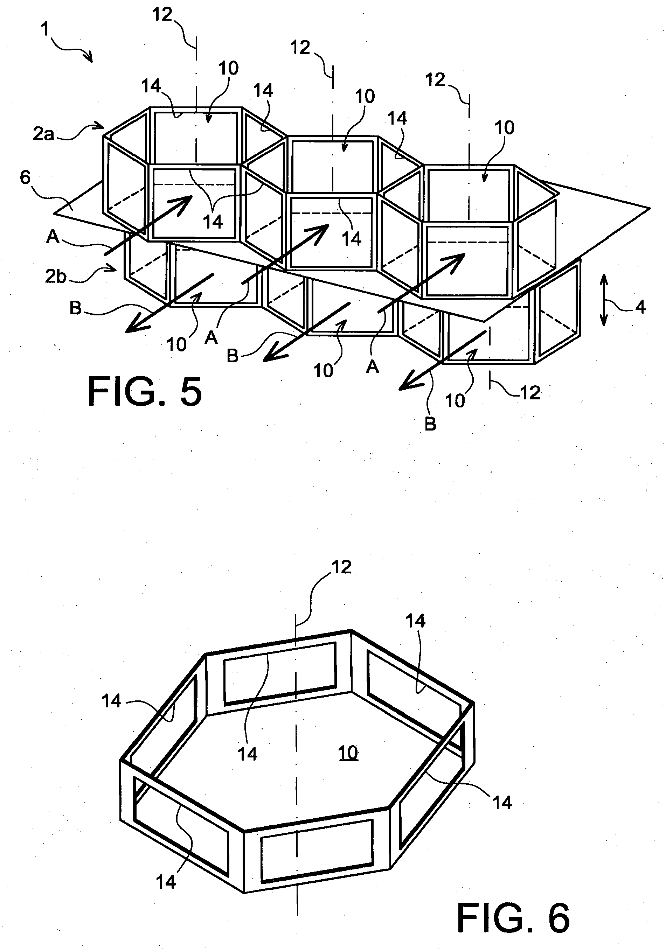

Globalement, chaque réseau 2a, 2b est réalisé par une structure métallique en nid d'abeilles, dont les alvéoles cylindriques 10 de section hexagonale présentent des axes 12 parallèles à la direction d'empilement 4. Par conséquent, seules les arêtes hautes et basses des alvéoles 10 sont au contact des membranes 6, comme cela est visible sur les figures 4 et 5.

De plus, afin de permettre la circulation des flux d'air à travers les structures 2a, 2b, dans un plan orthogonal aux axes 12 des alvéoles, au moins une partie des faces constituant ces alvéoles sont perforées. Ces performations 14, prévues sur toutes les faces ou uniquement sur certaines d'entre elles, prennent de préférence chacune la forme d'un rectangle centré sur la face concernée. La superficie de chaque perforation 14 peut être comprise entre 40 et 75% de la superficie de la face d'alvéole sur laquelle elle est réalisée.

Ainsi, comme cela a été schématisé par les flèche A sur la figure 3, le flux d'air vicié A peut serpenter à travers la structure 2a avant de s'en échapper, en passant d'une alvéole à l'autre en empruntant les perforations 14. Il en est bien entendu de même pour le flux d'air neuf B traversant les structures en nid d'abeilles 2b. De manière générale, cette configuration améliore les transferts thermiques et les transferts de vapeur d'eau entre les deux flux d'air A et B.

La résistance mécanique de l'empilement est également très satisfaisante, grâce en particulier à l'utilisation de structures en nid d'abeilles. De plus, ces structures 2a, 2b sont préférentiellement décalées les unes des autres afin que les axes 12 des alvéoles des structures 2a, 2b directement consécutives ne soient pas confondus. Il est par exemple retenu un agencement en quinconce selon la direction d'empilement, dans lequel les structures 2a ont toutes le même positionnement impliquant que les axes 12 de leurs alvéoles sont, confondus deux à deux, de même que les structures 2b ont toutes le même positionnement impliquant que les axes 12 de leurs alvéoles sont également confondus deux à deux. Néanmoins, comme cela est visible sur la figure 5, chaque structure 2a est décalée par rapport la structure 2b lui étant directement consécutive dans la direction d'empilement 4, selon une direction du plan orthogonal à cette même direction 4. Le décalage peut s'effectuer sur une distance identique ou proche d'une demi-largeur d'alvéole.

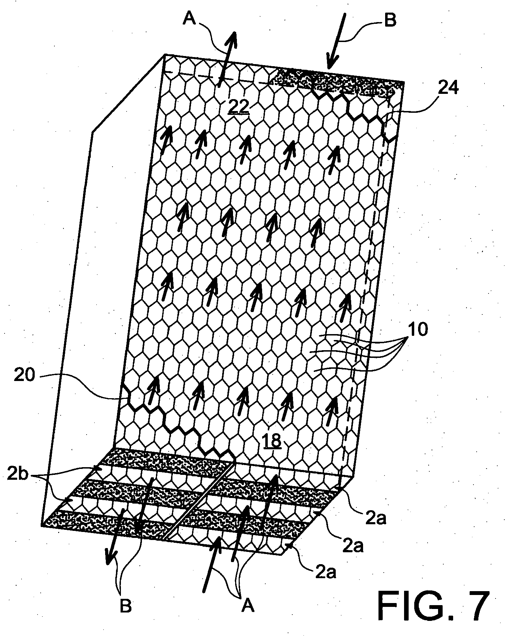

L'invention permet de maîtriser parfaitement la circulation des flux au sein de chacune des structures 2a, 2b, en choisissant judicieusement les faces des alvéoles à perforer, et celles à conserver. Par exemple, dans l'autre réalisation de la figure 7, il est créé, au sein de chaque structure en nid d'abeilles 2a, 2b, une zone de distribution du flux d'air ainsi qu'une zone de collecte du flux d'air.

Pour ce qui concerne chaque structure 2a, celle-ci présente des perforations au niveau de chacune des faces des alvéoles 10, à l'exception de certaines alvéoles situées à proximité du chant d'entrée du flux A, et de certaines alvéoles situées à proximité du chant de sortie de ce même flux A.

En effet, seule la moitié droite du chant d'entrée de la structure supérieure 2a est prévue pour assurer l'introduction du flux A dans la structure, l'autre moitié, grisée sur la figure 7, étant obstruée. De plus, certaines faces d'alvéoles, également grisées sur la figure 7, restent non perforées afin de créer une zone de distribution 18 du flux A. Ces faces, en vue de dessus, forment une ligne 20 qui part de la jonction entre les deux moitiés du chant d'entrée, et qui s'étend vers la gauche en allant dans la direction générale du flux A. Par conséquent, le flux empruntant la zone de distribution 18 se déploie progressivement d'une demi-largeur de structure à une largeur entière de structure, en étant guidé par la ligne étanche 20.

D'autre part, seule la moitié gauche du chant de sortie de la structure supérieure 2a est prévue pour assurer l'extraction du flux A de la structure, l'autre moitié, grisée sur la figure 7, étant obstruée. De plus, certaines faces d'alvéoles, également grisées sur la figure 7, restent non perforées afin de créer une zone de collecte 22 du flux A. Ces faces, en vue de dessus, forment une ligne 24 qui part de la jonction entre les deux moitiés du chant de sortie, et qui s'étend vers la droite en allant dans la direction opposée à celle du flux A. Par conséquent, le flux empruntant la zone de collecte 22 se rétrécit progressivement d'une largeur entière de structure à une demi-largeur de structure, en étant guidé par la ligne étanche 24.

Cette configuration est de préférence adoptée pour toutes les structures 2a, alors que les structures 2b sont quant à elles prévues pour adopter une configuration inversée. Par conséquent, sur la représentation de la figure 7, l'entrée du flux A s'effectue sur toute la hauteur de l'empilement, sur la moitié droite de ce dernier, tandis que la sortie du flux A s'effectue sur toute la hauteur de l'empilement, sur la moitié gauche de ce dernier. De même, l'entrée du flux B à contre-courant s'effectue sur toute la hauteur de l'empilement, sur la moitié droite de ce dernier, tandis que la sortie du flux B s'effectue sur toute la hauteur de l'empilement, sur la moitié gauche de ce dernier.

Ainsi, la face avant de l'échangeur 1 présente une moitié droite dédiée à l'entrée du flux A et une moitié gauche dédiée à la sortie du flux B, tandis que la face arrière de cet échangeur présente une moitié droite dédiée à l'entrée du flux B et une moitié gauche dédiée à la sortie du flux A.

A titre indicatif, il est noté que la fabrication des structures en nid d'abeilles 2a, 2b peut s'effectuer de manière conventionnelle, à l'aide de plaques/feuilles d'aluminium ou d'un autre métal qui sont corruguées par une presse avant d'être soudées les unes aux autres pour former les alvéoles. Les perforations des faces sont alors préférentiellement réalisées avant l'étape de presse, par découpe des feuilles métalliques, par exemple par découpe laser, jet d'eau, ou encore emboutissage.

Bien entendu, diverses modifications peuvent être apportées par l'homme du métier à l'invention qui vient d'être décrite, uniquement à titre d'exemples non limitatifs.

## Revendications

1. Echangeur (1) à double flux d'air, permettant un transfert thermique et un transfert d'humidité entre les deux flux d'air, et comprenant une pluralité de réseaux de circulation d'air (2a, 2b) empilés les uns sur les autres selon une direction d'empilement (4) et séparés deux à deux par des membranes (6) perméables à la vapeur d'eau et imperméables à l'air,
**caractérisé en ce qu'**au moins l'un desdits réseaux (2a, 2b) est réalisé par une structure en nid d'abeilles en appui de part et d'autre respectivement contre deux desdites membranes (6), ladite structure en nid d'abeilles présentant des alvéoles cylindriques (10) dont les axes (12) sont parallèles à ladite direction d'empilement (4), et dont au moins une partie des faces constituant ces alvéoles sont perforées pour le passage de l'air.

2. Echangeur selon la revendication 1, **caractérisé en ce que** les alvéoles cylindriques (10) sont de section hexagonale.

3. Echangeur selon l'une quelconque des revendications précédentes, **caractérisé en ce qu'**il est configuré pour que la circulation de l'air à l'intérieur de l'échangeur s'effectue à co-courants, à courants croisés, ou à contre-courants.

4. Echangeur selon l'une quelconque des revendications précédentes, **caractérisé en ce que** lesdites membranes (6) sont réalisées en matériau polymère ou en papier.

5. Echangeur selon l'une quelconque des revendications précédentes, **caractérisé en ce que** chacun desdits réseaux (2a, 2b) est réalisé par une structure en nid d'abeilles.

6. Echangeur selon l'une quelconque des revendications précédentes, **caractérisé en ce qu'**au moins l'un des réseaux (2a, 2b) présente des axes d'alvéoles (12) décalés par rapport aux axes (12) des alvéoles d'au moins l'un des réseaux (2a, 2b) lui étant directement consécutifs selon la direction d'empilement (4).

7. Echangeur selon l'une quelconque des revendications précédentes, **caractérisé en ce que** chaque structure en nid d'abeilles est métallique.

8. Système de traitement et de conditionnement d'air (100) comprenant un échangeur (1) selon l'une quelconque des revendications précédentes.

## Patentansprüche

1. Tauscher (1) mit doppeltem Luftstrom, der einen Wärmetransfer und einen Feuchtigkeitstransfer zwischen den zwei Luftströmen ermöglicht, und der eine Mehrzahl von Luftzirkulationsnetzen (2a, 2b) umfasst, die entlang einer Stapelungsrichtung (4) aufeinander gestapelt und paarweise durch Membrane (6) getrennt sind, die für Wasserdampf durchlässig und für Luft undurchlässig sind,
**dadurch gekennzeichnet, dass** wenigstens eines der Netze (2a, 2b) durch eine Bienenwabenstruktur realisiert ist, die auf beiden Seiten jeweils gegen zwei der Membrane (6) anliegt, wobei die Bienenwabenstruktur zylindrische Zellen (10) aufweist, deren Achsen (12) parallel zur Stapelungsrichtung (4) sind, und von denen wenigstens ein Teil der Seiten, die diese Zellen bilden, perforiert sind, um Luft durchzulassen.

2. Tauscher nach Anspruch 1, **dadurch gekennzeichnet, dass** die zylindrischen Zellen (10) einen hexagonalen Querschnitt aufweisen.

3. Tauscher nach einem der vorhergehenden Ansprüche, **dadurch gekennzeichnet, dass** er dazu ausgelegt ist, dass die Liftzirkulation im Inneren des Tauschers im Gleichstrom, im Kreuzstrom oder im Gegenstrom erfolgt.

4. Tauscher nach einem der vorhergehenden Ansprüche, **dadurch gekennzeichnet, dass** die Membrane (6) aus Polymermaterial oder aus Papier realisiert sind.

5. Tauscher nach einem der vorhergehenden Ansprüche, **dadurch gekennzeichnet, dass** jedes der Netze (2a, 2b) durch eine Bienenwabenstruktur realisiert ist.

6. Tauscher nach einem der vorhergehenden Ansprüche, **dadurch gekennzeichnet, dass** wenigstens eines der Netze (2a, 2b) Zellenachsen (12) aufweist, die versetzt sind bezüglich der Achsen (12) der Zellen wenigstens eines der Netze (2a, 2b), die ihm in der Stapelungsrichtung (4) direkt folgen.

7. Tauscher nach einem der vorhergehenden Ansprüche, **dadurch gekennzeichnet, dass** jede Bienenwabenstruktur aus Metall ist.

8. System zur Behandlung und zur Konditionierung von Luft (100) umfassend einen Tauscher (1) nach einem der vorhergehenden Ansprüche.

## Claims

1. Dual air flow exchanger (1), enabling heat transfer and humidity transfer between the two air flows, and comprising a plurality of air circulation networks (2a, 2b) stacked on each other along a stacking direction (4) and separated in pairs by membranes (6) permeable to water vapour and impermeable to air,
**characterised in that** at least one of said networks (2a, 2b) is made from a honeycomb structure with its two sides bearing on two of said membranes (6), said honeycomb structure having cylindrical cells (10) with axes (12) parallel to said stacking direction (4), and in which at least some of the faces forming these cells are perforated to allow air passage.

2. Exchanger according to claim 1, **characterised in that** cylindrical cells (10) have a hexagonal cross-section.

3. Exchanger according to any one of the previous claims, **characterised in that** it is configured so that air circulation inside the exchanger takes place in co-currents, cross currents or counter-currents.

4. Exchanger according to any one of the previous claims, **characterised in that** said membranes (6) are made from a polymer material or paper.

5. Exchanger according to any one of the previous claims, **characterised in that** each of said networks (2a, 2b) is made from a honeycomb structure.

6. Exchanger according to any one of the previous claims, **characterised in that** at least one of the networks (2a, 2b) has cell axes (12) offset from the axes (12) of cells in at least one of the networks (2a, 2b) directly consecutive along the stacking direction (4).

7. Exchanger according to any one of the previous claims, **characterised in that** each honeycomb structure is metallic.

8. Air treatment and air conditioning system (100) comprising an exchanger (1) according to any one of the previous claims.
